# EUROPEAN PATENT SPECIFICATION

(11) **EP 0 643 817 B1**
(45) Date of publication and mention of the grant of the patent: **03.03.1999**
(21) Application number: 93913318.7
(22) Date of filing: 08.06.1993
(51) Int. Cl.: F23G 5/027, F23G 5/46, C10B 1/10

(54) **GENERATION OF ELECTRICITY FROM WASTE MATERIAL**
ERZEUGUNG VON ELEKTRIZITÄT AUS ABFALLMATERIAL
PRODUCTION D'ELECTRICITE A PARTIR DE DECHETS

(30) Priority: 09.06.1992 GB 9212183; 10.12.1992 GB 9225826
(43) Date of publication of application: 22.03.1995
(73) Proprietor: WASTE GAS TECHNOLOGY LIMITED, Romsey, Hants SO51 0HR (GB)
(72) Inventor: GRIMSHAW, Anthony John, Lockerley, Hants SO51 0JF (GB); MATON, Maurice Edward George, Whiteparish, Wiltshire SP5 2SZ (GB)
(74) Representative: Lomas, Geoffrey Michael
(86) International application number: GB9301213
(87) International publication number: WO9325848

(56) References cited:
- EP-A- 0 067 139
- DE-A- 2 821 825
- DE-A- 2 848 485
- DE-A- 3 048 350
- DE-C- 156 952
- FR-A- 2 307 865
- FR-A- 2 366 354
- GB-A- 291 550
- US-A- 3 775 071

## Description

This invention relates to gasifying waste material and is particularly concerned with the generation of electricity thereby.

A major and widely-used method of waste disposal is landfill. However, there are significant problems associated with landfill including the lack of available landfill sites, the pollution of groundwater and the uncontrolled generation of gas.

Incineration is an alternative method of waste disposal alleviating the problems of landfill by burning off most of the organic constituents of the waste to leave a solid ash residue for disposal of considerably reduced volume. However, the exhaust fumes resulting from incineration are a source of pollution, and are difficult to treat in order to meet current environmental standards.

DE-A-3048350 discloses plant for generating electricity, using gaseous fuel produced by heating waste material, without allowing combustion to take place.

FR-A-2366354 discloses an oven, means for feeding waste material to the oven, and for heating the waste material while in the oven, without allowing combustion to take place, and means for collecting gaseous fuel liberated by such heating.

US-A-3775071 discloses plant for gasifying coal particles, wherein the coal is transferred between hoppers before heating takes place in a reactor operating at super-atmospheric pressure.

According to the invention, a method of gasifying waste material in an apparatus consisting of at least one first hopper means and a second hopper means for accommodating said waste material, said hopper means being connected by a duct with a non-return gas sealing means at entry to the second hopper, purging means being provided so as to introduce inert gas into the second hopper and a gasifier connected to the second hopper means, said method consisting of the following steps:
- transferring waste from the first hopper to the second hopper;
- preventing air passing from the first to the second hopper during the transfer by use of the inert gas purging means;
- closing the non-return valve means;
- purging the waste in the second hopper;
- transferring the waste to the gasifier;
- heating the waste in the gasifier without allowing combustion to take place.

The invention also comprises apparatus for carrying out the method.

The invention is also concerned with the conversion of the waste material into disposable ash.

The various aspects of the invention will now be described by way of example only, with reference to the accompanying semi-diagrammatic drawings, wherein:-
Figure 1 is a diagrammatic illustration of a second embodiment;
Figure 2 is a view in perspective of a fuel block 190, used in a non-illustrated modification;
Figure 3 is a side view, in section, of the feed means 62 of Figure 1;
Figure 4 is a side view of the gasifier 62 of Figure 1;
Figure 5 is a side view, in section, of the gasifier drum 123 shown in Figure 4;
Figure 6 is an end view in section, taken on the lines VI-VI of Figure 5;
Figure 7 is a plan view of feed means suitable for feeding waste material to the gasifier drum of a preferred embodiment;
Figure 8 is an end view, taken on the lines VIII-VIII of Figure 5;
Figure 9 is a side view, in medial section, of a drum drive wheel 124; and
Figure 10 is an end view, partly in section, which shows how a drum drive wheel 124 is spring mounted.

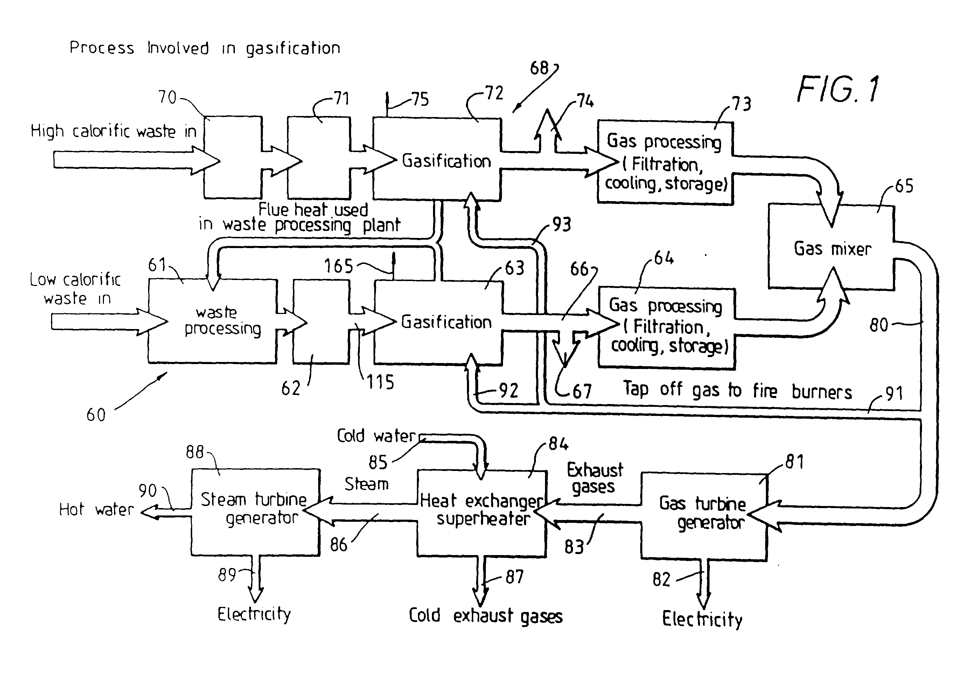

With reference to Figure 1, apparatus for gasifying waste material and for producing gaseous fuel thereby, is shown.

Figure 1 illustrates an arrangement, wherein relatively low calorific value waste material is supplied to gasifying apparatus 60 and relatively high calorific value waste material in a separate (similar) apparatus 68, which operates in parallel with apparatus 60.

In apparatus 60, waste processing takes place at 61. This comprises taking unsorted waste material such as domestic waste material, shredding it, and separating out ferrous and non-ferrous metals, as well as ceramics. Ferrous metals are separated out by magnetic means. Non-ferrous metals are separated out by eddy-current means. An endless belt conveyor subjected to vibration is used to separate out ceramic materials. Similar conveyors are also employed at the metal separation stages.

Separated out metals are employed in subsequent re-cycling operations.

The sorted material comprises small size particles, of about 4.00 to 6.00mm diameter.

The sorted material may then be subjected to a drying operation, using hot air.

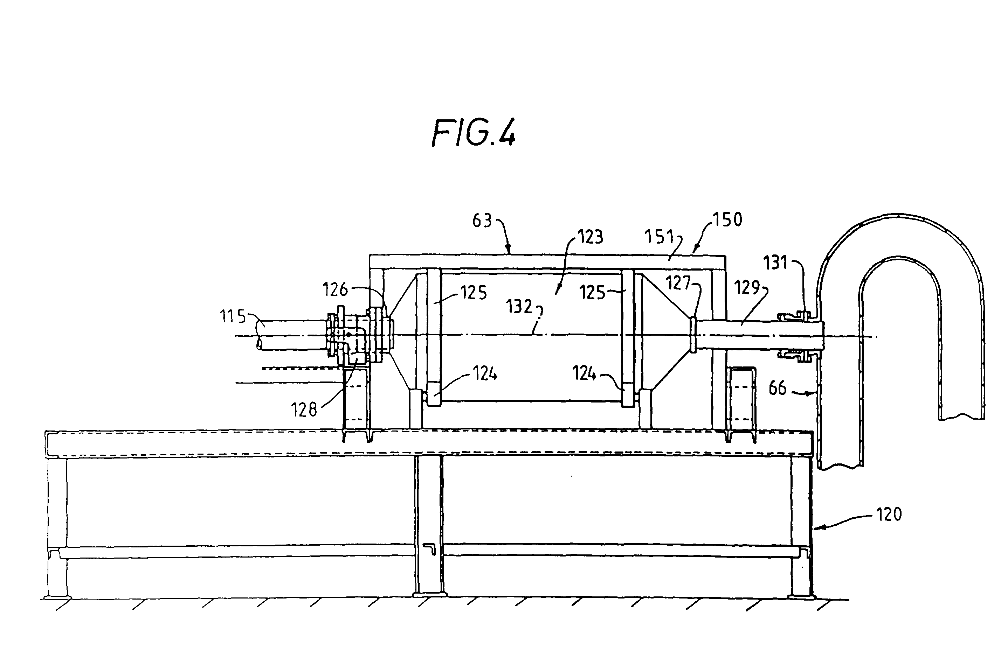

In the embodiment of Figure 1, the material is then fed, using feed means 62, which also serves to compact the material, to an airtight oven or gasifier 63 where it is subjected to high temperature, (say 800°C) without allowing combustion to take place. Here gas is driven off, to be subjected, in a processing unit 64, to processing such as scrubbing, filtration, cooling and storage before being discharged to a mixing container 65. A line 66 (see also Figure 4), connects the gasifier 63 and the processing unit 64. Residual ash is removed, by way of a valved duct 67, for subsequent use or disposal.

In the case of apparatus 68, unsorted waste material, such as high calorific value industrial material, including packaging and plastics materials is processed at 70 before being fed to a feed means 71. Processing may comprise shredding only. After drying (if required) the waste material is fed to an airtight oven/gasifier 72 by the feed means 71. Gas driven off is subjected to processing at 73. The conveyor means 71, gasifier 72 and processing unit 73 are of substantially identical form to units 62, 63 and 64 respectively.

Residual ash is removed, by way of a valved duct 74, for subsequent use.

After processing, the gas is discharged to the mixing container 65.

Gaseous fuel flows from the container 65 along a line 80 to the gas inlet of electricity-producing means comprising a gas turbine generator unit 81 whereby electrical power is produced and fed to a power line 82. The turbine exhaust gases are discharged, by way of a duct 83, to a heat exchanger 84 which incorporates a steam superheater. The heat exchanger 84 has a feed water inlet 85, an outlet 86 for superheated steam and a turbine exhaust gas outlet 87.

Steam discharged from the outlet 86 is fed to further electricity-producing means, comprising a steam turbine generator unit 88 whereby further electrical power is produced and fed to a power line 89. Exhaust from the turbine of the unit 88 is discharged, as hot water, by way of an outlet duct 90.

The gas flow line 80 has a main branch line 91 which feeds subsidiary branch lines 92, 93, whereby gas fuel is fed to the burners (not shown) of gasifiers 63, 72, in order to heat the waste material contained therein. The gasifiers are provided with exhaust gas chimneys 165, 75.

Either of the feed means 62 or 71 of the embodiment in Figure 1 may be used for a single apparatus.

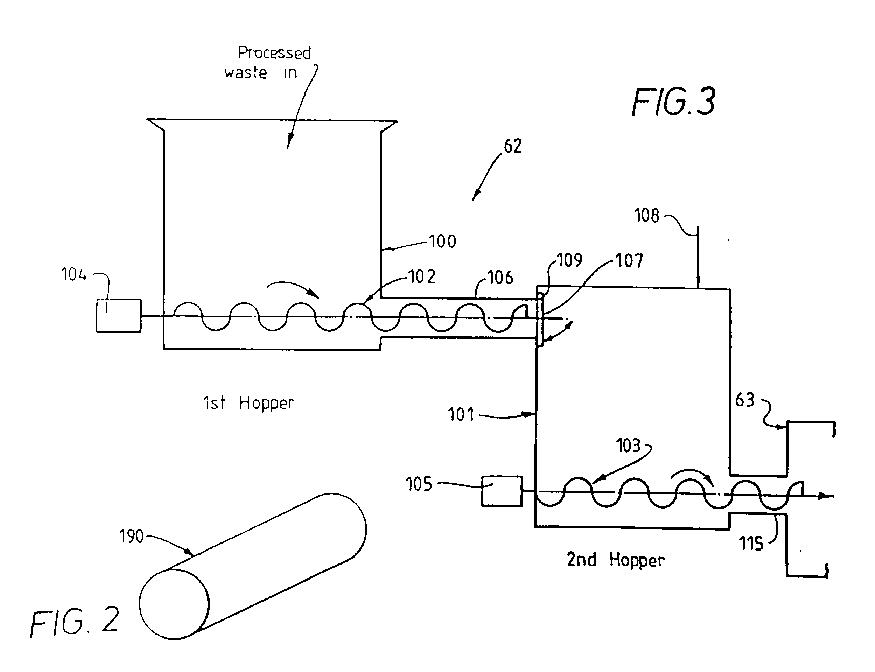

Figure 3 shows one form for the feed means 62 or 71, which comprises a two-stage system using first and second hoppers 100, 101, with first and second screw conveyors 102, 1 03 disposed in their lower inferiors.

Conveyor 102 is driven by an external motor 104, and conveyor 103 by an external motor 105.

The discharge end of conveyor 102 is disposed in a duct 106 interconnecting the lower end of hopper 100 with the upper end of hopper 101, hopper 100 being disposed at a higher level than hopper 101.

A flap valve 107 serving as non-return gas sealing means is disposed at the outlet end of duct 106, and is pivotable about a hinge 109.

The hopper 100 is open to atmosphere. The interior of the hopper 101 is supplied with an inert gas at slight super-atmospheric pressure (about 2.0 lbs per square inch), by way of a line 108 to displace air in the waste. The blanket of inert gas may comprise exhaust gas tapped off chimney 165 (Figure 1) or other unreactive gas such as carbon dioxide or nitrogen. The duct 106 and flap valve 107 serve as gas lock means between the hoppers 100 and 101 and thus restrict entry of air into the hopper 101 by way of the hopper 100.

Processed waste material is supplied to the hopper 100 and is discharged therefrom, in compacted form (so further reducing any air content of the material), by the screw conveyor 102, along the duct 106.

The discharged waste material causes the flap valve 107 to lift and allow the material to enter the hopper 101.

The screw conveyor 103 then discharges the transferred waste material, again in compacted form, from the hopper 101 and into the gasifier 63, by way of a feed duct 115.

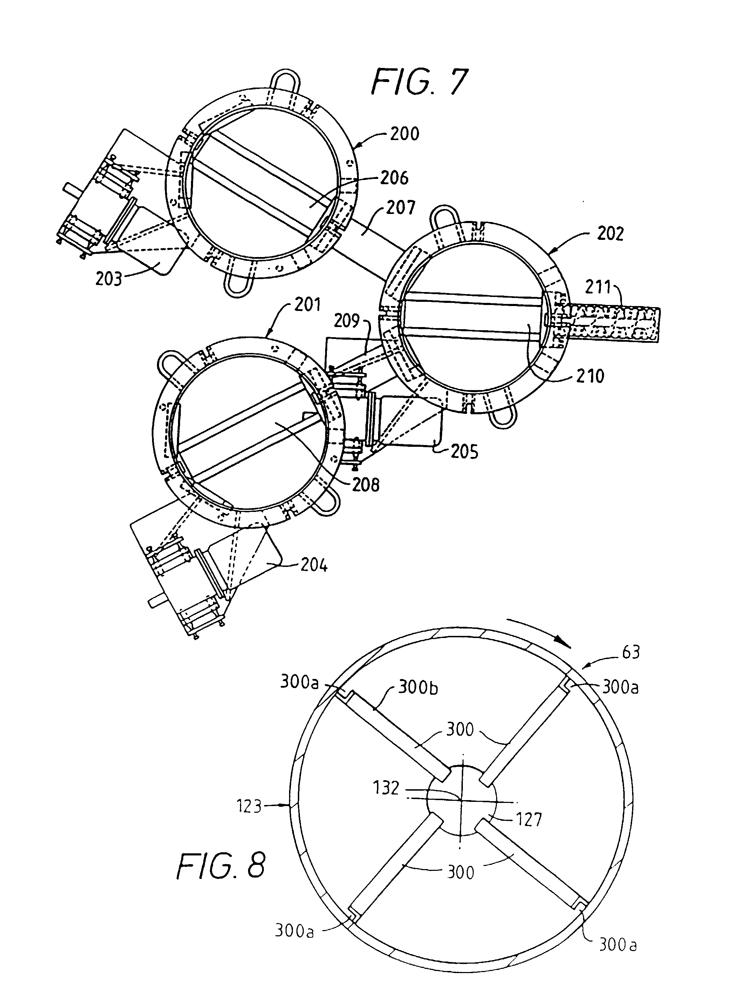

Figure 7 shows an alternative, preferred, form of the feed means 62 or 71 which comprises a pair of primary hoppers 200, 201 and a secondary hopper 202. The primary hoppers 200, 201 are loaded alternately with waste for feeding to the secondary hopper 202 by respective screw conveyors 206, 208 via respective ducts 207, 209.

When one of the primary hoppers has discharged its load to the secondary hopper, its duct is sealed from the secondary hopper by valve means (not shown) and the hopper is then opened to the atmosphere for refilling. During refilling, the other primary hopper may be discharging its load to the secondary hopper.

Once a primary hopper is filled it is closed and purged with carbon dioxide or other inert gas, in order to expel air from the waste through a vent valve (not shown) to atmosphere. Following purging the valve means between the hopper and the secondary hopper is opened and a motor 203 or 204 is switched on to drive the respective screw conveyor 206 or 208 to transfer the waste to the secondary hopper 202.

The secondary hopper screw conveyor 210 may be driven continuously by motor 205 to ensure a continuous supply of waste along the duct 211 to the gasifier oven.

The secondary hopper is also supplied with carbon dioxide or other inert gas, maintained at a pressure sufficient to substantially prevent backflow of generated gases to the secondary hopper from the gasifier, or the entry of purged gases from the primary hoppers.

Figure 4 shows the gasifier 63 mounted on a chassis 120. The gasifier 63 comprises a rotatable drum 123 mounted on spring-loaded drive wheels 124, the peripheries of which engage with circular driving bands 125 carried by the drum 123. The wheels 124 react against the weight of the drum 123 and its contents. The wheels 124 are driven by electric motor and chain drive units (not shown).

The drum 123 has an inlet 126 (Figure 4) and an outlet 127. The inlet 126 is connected to the stationary discharge pipe duct 115 (Figure 3) by way of a rotatable seal unit 128. The outlet 127 incorporates a rotatable gas outlet pipe 129 connected to the stationary line 66 (Figure 1). A gland unit 131 seals the pipe 129 to the line 66 and allows relative rotation therebetween.

The drum 123 is rotatable about a substantially horizontal axis 132. If desired, the drum may be tilted however, by suitable modification of the associated drive and support structure, so that the axis 132 is no longer substantially horizontal.

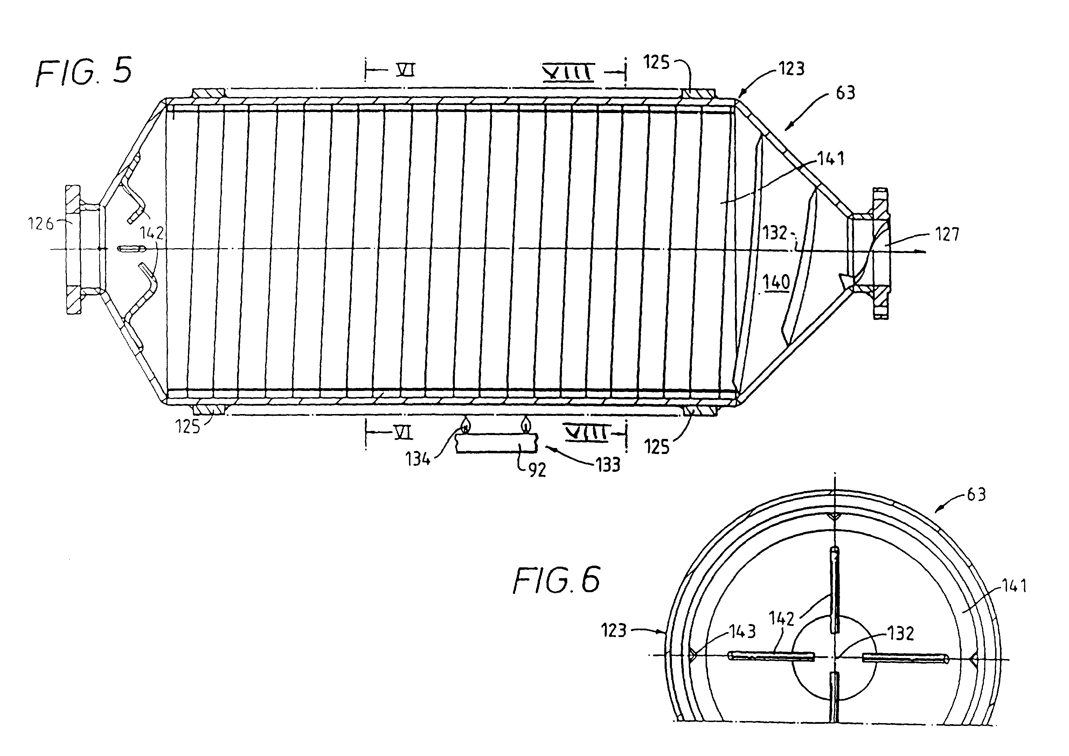

Figures 5 and 6 show the drum 123 in further detail.

Figure 5 shows the drum 123 provided with means 133 for heating the drum exterior, the means 133 comprising the gas branch line 92 and gas burners 134 supplied thereby.

The drum 123 is of welded steel construction. The interior 140 of the drum houses a mild steel strip 141 wound in spiral form around the rotational axis 132 and secured, by welding, to the inner surface of the drum.

Angular pins 142 are secured to the drum interior adjacent the inlet 126 thereof. The pins 142 vary in effective length and their outer, or unsecured ends are offset relative to the central axis 132. (See Figure 6.) Inwardly projecting strips 143 are secured to the interior of the drum 123. The strips 143 which are equi-spaced, extend longitudinally along the drum interior. They co-operate with the spiral strip 141 and pins 142 in providing structural means operable to break or churn up and mix the waste material. The spiral strip 141 further serves as a screw conveyor, causing the broken up material to pass along the interior of the drum 123 towards the outlet 127 thereof. Passage of the material takes about 10 minutes.

In a preferred embodiment the portion of the mild steel strip 141 (Figure 5) that is located in the frusto-conical outlet end of the drum 123 is replaced by channel means for scooping up ash from the bottom of the drum 123 and for raising the ash above the drum axis of rotation 132 so that the ash then slides downwards from the channel means into the drum outlet 127. The channel means may comprise a series of channel defining members 300 attached to the drum which are preferably disposed parallel to planes containing the axis of rotation 132 of the drum 123 as shown in Figure 8, each member being elongate and of a section, such as an L-shaped section suitable to define a respective channel 300a for scooping up and retaining the ash and, on being raised to a position above the axis 132, such as 300b, for allowing the ash to slide down the channel and into the outlet 127.

Alternatively the channel means may comprise a single elongate pipe member (not illustrated) attached to the drum and which typically defines a channel disposed substantially parallel to a plane of the drum containing the drum axis of rotation, one end of the pipe member being provided with an inlet opening, whilst the other end is provided with an outlet opening. Preferably the inlet opening is joined to the end of the spiral channel which is formed in between the coils of the spiral strip 141 in the cylindrical portion of the drum 123 and which is that end of the spiral channel nearest to the outlet 127, such that substantially all of the ash leaving that end of the spiral channel enters directly into the inlet opening of the pipe as this is raised during rotation of the drum 123. When the pipe member has been lifted up to a sufficient level, the ash slides down through the pipe member and out of the outlet opening into outlet 127. The end of the pipe member having the outlet opening preferably projects into the outlet 127, which may conveniently be provided with ash driving means, such as a further spiral strip of mild steel, for driving the ash along outlet 127 away from the drum 123. Guide means adjacent to the outlet opening of the pipe member may be desirable, for example in the form of a plate, for directing the ash from the outlet opening into the ash driving means.

As shown in Figure 4, the rotatable drum 123 is housed in a box-like enclosure 150 lined with thermal insulation 151.

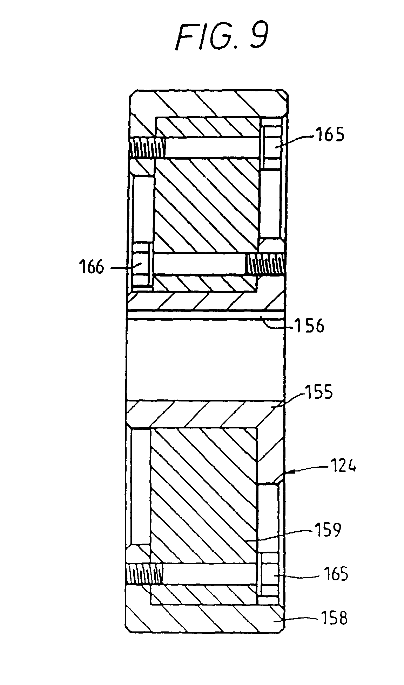

Figure 9 shows a drive wheel 124 in further detail. The wheel is of composite form and comprises a steel central hub portion 155, with a keyway 156, for mounting on a shaft 157 (Figure 8), a steel outer rim or tyre portion 158, and an intermediate portion 159 of load accepting heat insulating material. Bolts 165, 166, secure the three portions 155, 158, 159 together.

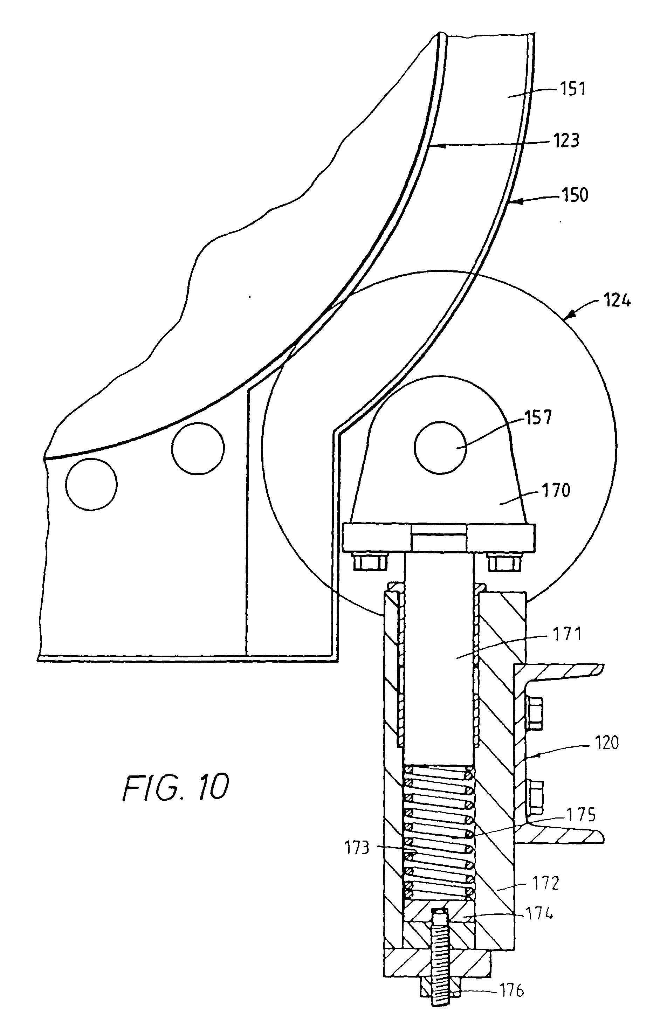

Figure 10 shows how the drive wheels 124 are spring-mounted. The shaft 157 of a wheel 124 is mounted for rotation between the forks of a bifurcated support bracket 170. The bracket 170 is mounted on the upper end of a pin 171 slidably located within a support block 172 secured to the chassis 120. A compression spring 173 is disposed between the lower end of the pin 171 and a disc 174 disposed within the interior 175 of the support block 172. A lockable adjusting screw 176 mounted for rotation in the lower end of the block 172 is used to adjust the compressive load on the spring 173, and thereby the spring loading on the drive wheel 124.

In a non-illustrated modification, the waste material is compacted under substantial pressure so as to form cylindrical fuel blocks 190 (Figure 2) before being fed to the gasifier 63. A fuel block 190 is about 90.00 mm in diameter, about 300.00 mm in length, and weighs about 250.00 gm.

The discrete fuel blocks 190 are subsequently fed, under pressure imposed by a feeding ram, into the drum 123 of the gasifier 63.

## Claims

1. A method of gasifying waste material in an apparatus consisting of at least one first hopper means (100) and a second hopper means (101) for accommodating said waste material, said hopper means (100, 101) being connected by a duct(106) with a non-return gas sealing means (107) at entry to the second hopper (101), purging means (108) being provided so as to introduce inert gas into the second hopper (101) and a gasifier (63) connected to the second hopper means, said method consisting of the following steps:
- transferring waste from the first hopper (100) to the second hopper (101);
- preventing air passing from the first to the second hopper during the transfer by use of the inert gas purging means (108);
- closing the non-return valve means (107);
- purging the waste in the second hopper (101);
- transferring the waste to the gasifier (63);
- heating the waste in the gasifier (63) without allowing combustion to take place.

2. The method of claim 1, including the step of disposing the first hopper means (100) at a higher level than the second hopper (101).

3. The method of claims 1 or 2, including the step of using a conveyor (102) to transfer the waste material from the first hopper (100) to the second hopper (101).

4. The method of claim 3, including the step of using a second conveyor (103) to remove waste material from the second hopper (101).

5. The method of claim 3 or 4, wherein the or each conveyor comprises a screw conveyor.

6. The method claimed in any one of claims 1 to 5, wherein gas produced in the gasifier (63) is then subjected to processing (64) such as scrubbing, filtration and cooling.

7. The method claimed in any one of claims 1 to 6, including the step of gasifying the waste material, takes place in two or more separate apparatus (63, 72), and the further step of mixing together (65) gas produced from each apparatus, prior to subsequent use (e.g. turbine 81).

8. The method claimed in any one of claims 1 to 7, including the step of compressing the waste material into discrete blocks (190) before being transferred to the gasifier (63).

9. The method claimed in any one of claims 1 to 8, wherein heating waste in the gasifier (63) produces gaseous fuel.

10. The method claimed in claim 9, wherein some of the gaseous fuel produced is used (by 92) to heat the waste in the gasifier (62).

11. Apparatus for performing the method claimed in any one of claims 1 to 10, consisting of at least one first hopper means (100) and a second hopper means (101) for accomodating said waste material, said hopper means (100,101) being connected by a duct (106) with a non-return gas sealing means (107) at entry to the second hopper (101) purging means being provided so as to introduce inert gas into the second hopper (101) and a gasifier (63) connected to the second hopper means wherein the gasifier (63) comprises an oven (123), feed means (62), for transferring waste to the oven (123), means (92) for heating the waste while in the oven (123) without allowing combustion to take place, means (66) for collecting gas liberated by heating the waste, and electricity producing means (81, 88), driven by at least some of the collected gas.

12. Apparatus as claimed in claim 11, characterised in that the oven (123) comprises a rotatable drum .

13. Apparatus as claimed in claim 12, characterised in that the rotatable drum (123) has an inlet (126) and an outlet (127), the interior of the drum being provided with engaging means (141, 142, 143) operable to mix up waste entering the drum by way of the drum inlet (126), and to pass the waste along the drum interior (140) towards the drum outlet (127), the engaging means comprising a structure (141) of spiral form secured to the interior (140) of the drum, co-operating with radially-disposed elongate structure (143) extending longitudinally along the drum interior (140).

14. Apparatus as claimed in claim 13, characterised in that the engaging means (141, 142, 143) further comprise pins (142) disposed at the inlet (126) to the drum (123), and off-set to the axis of rotation (132) of the drum.

15. Apparatus as claimed in any one of claims 12, 13 or 14, characterised in that the drum (123) is provided with channel means (300) for scooping up residual ash resulting from gasification of the waste from the bottom of the drum (123) and for raising the ash above the drum axis of rotation (132) so that the ash then slides downwards from the channel means (300) into the drum outlet (127).

16. Apparatus as claimed in claim 15, characterised in that the channel means comprises an elongate member (300) which defines a channel disposed substantially parallel to a plane of the drum (123) containing the drum axis of rotation (132).

17. Apparatus as claimed in claim 16, characterised in that the elongate member (300) is substantially L-shaped in cross-section.

18. Apparatus as claimed in claim 17, characterised in that the channel means (300) comprises a pipe having an inlet opening joined to the end of a spiral channel defined by the said structure (141) of spiral form such that, in use, substantially all ash leaving the end of the spiral channel enters directly into the inlet opening of the pipe as this rises during rotation of the drum (123).

19. Apparatus as claimed in claim 18, comprising guide means adjacent an outlet opening of the pipe for directing ash from said outlet opening into ash driving means adapted to drive ash along the drum outlet (127).

20. Apparatus as claimed in any one of claims 12 to 19, characterised in that the rotatable drum (123) is mounted on drive wheels (124).

21. Apparatus as claimed in claim 20, characterised in that the drive wheels (124) are spring loaded, against the weight of the drum (123).

22. Apparatus as claimed in claim 20 or 21, characterised in that the drum (123) is mounted on heat-insulated drive wheels (124).

23. Apparatus as claimed in claim 22, characterised in that a drive wheel comprises an outer metallic portion (158), an inner metallic portion (155), and an intermediate portion (159) of heat-insulating material.

## Patentansprüche

1. Verfahren zum Vergasen von Abfallstoffen in einer Vorrichtung, die aus mindestens einer ersten Beschickungstrichter-Einrichtung (100) und einer zweiten Beschickungstrichter-Einrichtung (101) zur Aufnahme der Abfallstoffe besteht, wobei die Beschickungstrichter-Einrichtungen (100, 101) mittels einer Leitung (106) mit einer Gassperren-Dichteinrichtung (107) am Eingang in den zweiten Beschickungstrichter (101) verbunden sind, und wobei eine Spülgaseinrichtung (108) dazu vorgesehen ist, Edelgas in den zweiten Beschickungstrichter (101) und eine mit der zweiten Beschickungstrichter-Einrichtung verbundene Vergasungsvorrichtung (63) einzuleiten, wobei das Verfahren aus den folgenden Schritten besteht:
- Weiterleiten der Abfallstoffe aus dem ersten Beschickungstrichter (100) in den zweiten Beschickungstrichter (101);
- Verhindern eines Luftübertritts vom ersten in den zweiten Beschickungstrichter während der Weiterleitung durch Einsatz der Edelgas-Spülgaseinrichtung (108);
- Verschließen der Gassperren-Dichteinrichtung (107);
- Durchspülen der Abfallstoffe im zweiten Beschickungstrichter (101);
- Weiterleiten der Abfallstoffe in die Vergasungsvorrichtung (63);
- Erwärmen der Abfallstoffe in der Vergasungsvorrichtung (63), ohne dabei einen Verbrennungsvorgang zuzulassen.

2. Verfahren nach Anspruch 1, welches den Schritt umfaßt, die erste Beschikkungstrichter-Einrichtung (100) auf einer Höhe anzuordnen, die über der Höhe des zweiten Beschickungstrichters (101) liegt.

3. Verfahren nach den Ansprüchen 1 oder 2, welches den Schritt umfaßt, zur Weiterleitung der Abfallstoffe aus dem ersten Beschickungstrichter (100) zum zweiten Beschickungstrichter (101) einen Förderer (102) einzusetzen.

4. Verfahren nach Anspruch 3, welches den Schritt umfaßt, zum Austrag von Abfallstoffen aus dem zweiten Beschickungstrichter (101) einen zweiten Förderer (103) einzusetzen.

5. Verfahren nach Anspruch 3 oder 4, bei welchem der bzw. jeder Förderer einen Schneckenförderer aufweist.

6. Verfahren nach einem der Ansprüche 1 bis 5, bei welchem in der Vergasungsvorrichtung (63) gebildetes Gas anschließend einer Weiterbehandlung (64) wie Waschen, Filtrieren und Kühlen unterzogen wird.

7. Verfahren nach einem der Ansprüche 1 bis 6, welches den Schritt umfaßt, die Abfallstoffe zu vergasen, der in zwei oder mehr getrennten Vorrichtungen (63, 72) erfolgt, sowie den weiteren Schritt, entstandenes Gas aus jeder Vorrichtung vor anschließender Weiterverwendung (z.B. Turbine 81) zusammenzumischen.

8. Verfahren nach einem der Ansprüche 1 bis 7, welches den Schritt umfaßt, die Abfallstoffe vor ihrer Weiterleitung in die Vergasungsvorrichtung (63) zu einzelnen Blöcken (190) zu verdichten.

9. Verfahren nach einem der Ansprüche 1 bis 8, bei welchem bei der Erwärmung von Abfallstoffen in der Vergasungsvorrichtung (63) ein gasförmiger Brennstoff entsteht.

10. Verfahren nach Anspruch 9, bei welchem ein Teil des entstehenden gasförmigen Brennstoffs (mittels 92) zum Erwärmen der Abfallstoffe in der Vergasungsvorrichtung (62) verwendet wird.

11. Vorrichtung zur Durchführung des Verfahrens nach einem der Ansprüche 1 bis 10, welche aus mindestens einer ersten Beschickungstrichter-Einrichtung (100) und einer zweiten Beschickungstrichter-Einrichtung (101) zur Aufnahme der Abfallstoffe besteht, wobei die Beschickungstrichter-Einrichtungen (100, 101) mittels einer Leitung (106) mit einer Gassperren-Dichteinrichtung (107) am Eingang in den zweiten Beschickungstrichter (101) verbunden sind, und wobei eine Spülgaseinrichtung (108) dazu vorgesehen ist, Edelgas in den zweiten Beschikkungstrichter (101) und eine mit der zweiten Beschickungstrichter-Einrichtung verbundene Vergasungsvorrichtung (63) einzuleiten, bei welcher die Vergasungsvorrichtung (63) einen Ofen (123), eine Zuführeinrichtung (62) zur Überleitung von Abfallstoffen in den Ofen (123), eine Einrichtung (92) zum Erwärmen der Abfallstoffe, solange diese sich im Ofen (123) befinden, ohne dabei einen Verbrennungsvorgang zuzulassen, eine Einrichtung (66) zum Auffangen von bei der Erwärmung der Abfallstoffe freigesetztem Gas, und eine Stromerzeugungseinrichtung (81, 88) aufweist, die zumindest mit einem Teil des aufgefangenen Gases betrieben wird.

12. Vorrichtung nach Anspruch 11, dadurch gekennzeichnet, daß der Ofen (123) eine Drehtrommel aufweist.

13. Vorrichtung nach Anspruch 12, dadurch gekennzeichnet, daß die Drehtrommel (123) einen Einlaß (126) und einen Auslaß (172) aufweist, wobei im Innenraum der Trommel Eingriffseinrichtungen (141, 142, 143) vorgesehen sind, die so betreibbar sind, daß sie über den Trommeleinlaß (126) einlaufende Abfallstoffe vermischen und die Abfallstoffe entlang des Trommelinnenraumes (140) zum Trommelauslaß (127) befördern, wobei die Eingriffseinrichtungen einen spiralförmigen Aufbau (141) aufweisen, der auf der Trommelinnenseite (140) befestigt ist und dabei mit einer radial angeordneten langgestreckten Konstruktion (143) zusammenwirkt, die in Längsrichtung entlang des Trommelinnenraumes (140) verläuft.

14. Vorrichtung nach Anspruch 13, dadurch gekennzeichnet, daß die Eingriffseinrichtung (141, 142, 143) weiterhin Stifte (142) aufweist, die am Einlaß (126) in die Trommel (123) angeordnet und gegenüber der Drehachse (132) der Trommel versetzt sind.

15. Vorrichtung nach einem der Ansprüche 12, 13 oder 14, dadurch gekennzeichnet, daß die Trommel (123) mit einer Kanaleinrichtung (300) zum Auffangen von Restasche, die bei der Vergasung der Abfallstoffe entsteht, am Boden der Trommel (123) und zum Hochfahren der Asche über die Drehachse (132) der Trommel ausgerüstet ist, so daß die Asche anschließend aus der Kanaleinrichtung (300) in den Trommelauslaß (127) nach unten rutscht.

16. Vorrichtung nach Anspruch 15, dadurch gekennzeichnet, daß die Kanaleinrichtung ein langgestrecktes Teil (300) aufweist, welches einen Kanal definiert, der im wesentlichen parallel zu einer Ebene der Trommel (123) verläuft, in welcher sich die Trommeldrehachse (132) befindet.

17. Vorrichtung nach Anspruch 15, dadurch gekennzeichnet, daß das langgestreckte Teil (300) einen im wesentlichen L-förmigen Querschnitt aufweist.

18. Vorrichtung nach Anspruch 17, dadurch gekennzeichnet, daß die Kanaleinrichtung (300) ein Rohr mit einer mit dem Ende eines von der spiralförmigen Konstruktion (141) definierten spiralförmigen Kanals verbundenen Einlaßöffnung aufweist, so daß im Betrieb im wesentlichen die ganze Asche, die aus dem Ende des spiralförmigen Kanals austritt, direkt in die Einlaßöffnung des Rohres eintritt, während dieses sich während der Drehung der Trommel (123) nach oben bewegt.

19. Vorrichtung nach Anspruch 18, welche nahe einer Auslaßöffnung des Rohres zum Überleiten von Asche aus der Auslaßöffnung in die Aschefördereinrichtung eine Führungseinrichtung aufweist, die sich zur Weiterleitung von Asche entlang des Trommelauslasses (127) eignet.

20. Vorrichtung nach einem der Ansprüche 12 bis 19, dadurch gekennzeichnet, daß die Drehtrommel (123) auf Antriebsrädern (124) angebracht ist.

21. Vorrichtung nach Anspruch 20, dadurch gekennzeichnet, daß die Antriebsräder (124) gegen das Gewicht der Trommel (123) federgespannt sind.

22. Vorrichtung nach Anspruch 20 oder 21, dadurch gekennzeichnet, daß die Trommel (123) auf wärmegedämmten Antriebsrädern (124) angebracht ist.

23. Vorrichtung nach Anspruch 22, dadurch gekennzeichnet, daß ein Antriebsrad einen außenliegenden Metallabschnitt (158), einen innenliegenden Metallabschnitt (155) und einen dazwischen liegenden Abschnitt (159) aus wärmedämmendem Werkstoff aufweist.

## Revendications

1. Procédé de gazéification d'ordures dans un appareil constitué au moins d'un premier dispositif à trémie (100) et d'un second dispositif à trémie (101) destinés à contenir des ordures, les dispositifs à trémie (100, 101) étant raccordés par un conduit (106) ayant un dispositif (107) d'arrêt de gaz afin que ceux-ci ne reviennent pas, placé à l'entrée de la seconde trémie (101), un dispositif de purge (108) étant destiné à introduire un gaz inerte dans la seconde trémie (101) et un gazéificateur (63) étant connecté au second dispositif à trémie, le procédé comprenant les étapes suivantes :
- le transfert des ordures de la première trémie (100) à la seconde trémie (101),
- l'interdiction de la circulation de l'air de la première trémie à la seconde pendant le transfert par utilisation du dispositif (108) de purge par un gaz inerte,
- la fermeture du dispositif d'arrêt empêchant le retour (107),
- la purge des ordures dans la seconde trémie (101),
- le transfert des ordures au gazéificateur (63),
- le chauffage des ordures dans le gazéificateur (63) sans que la combustion puisse s'effectuer.

2. Procédé selon la revendication 1, comprenant une étape de disposition du premier dispositif à trémie (100) à un niveau supérieur à celui de la seconde trémie (101).

3. Procédé selon la revendication 1 ou 2, comprenant une étape d'utilisation d'un transporteur (102) pour le transfert des ordures de la première trémie (100) à la seconde (101).

4. Procédé selon la revendication 3, comprenant une étape d'utilisation d'un second transporteur (103) destiné à retirer les ordures de la seconde trémie (101).

5. Procédé selon la revendication 3 ou 4, dans lequel le transporteur ou chaque transporteur comprend un transporteur à vis.

6. Procédé selon l'une quelconque des revendications 1 à 5, dans lequel le gaz produit dans le gazéificateur (63) est alors soumis à un traitement (64) tel qu'une épuration, une filtration et un refroidissement.

7. Procédé selon l'une quelconque des revendication 1 à 6, dans lequel l'étape de gazéification des ordures est réalisée dans au moins deux appareils séparés (63, 72), et qui comprend une étape supplémentaire de mélange (65) du gaz produit par tous les appareils avant une utilisation ultérieure (par exemple dans une turbine 81).

8. Procédé selon l'une quelconque des revendications 1 à 7, comprenant une étape de compression des ordures en blocs séparés (190) avant leur transfert au gazéificateur (63).

9. Procédé selon l'une quelconque des revendications 1 à 8, dans lequel le chauffage des ordures dans le gazéificateur (63) produit un combustible gazeux.

10. Procédé selon la revendication 9, dans lequel une partie du combustible gazeux produit est utilisée (en 92) pour le chauffage des ordures dans le gazéificateur (62).

11. Appareil de mise en oeuvre du procédé selon l'une quelconque des revendications 1 à 10 constitué d'au moins un premier dispositif à trémie (100) et d'un second dispositif à trémie (101) destinés à contenir les ordures, les dispositifs à trémie (100, 101) étant connectés par un conduit (106) ayant un dispositif (107) de fermeture empêchant le retour du gaz à l'entrée de la seconde trémie (101), un dispositif de purge étant disposé afin qu'il introduise un gaz inerte dans la seconde trémie (101), et un gazéificateur (63) connecté au second dispositif à trémie, dans lequel le gazéificateur (63) comporte un four (123), un dispositif (62) d'alimentation destiné à transférer les ordures vers le four (123), un dispositif (92) de chauffage des ordures lorsqu'elles se trouvent dans le four (123) sans que la combustion puisse s'effectuer, un dispositif (66) destiné à collecter le gaz dégagé par chauffage des ordures, et un dispositif (81, 88) producteur d'électricité, entraîné par une partie au moins du gaz collecté.

12. Appareil selon la revendication 11, caractérisé en ce que le four (123) comporte un tambour rotatif.

13. Appareil selon la revendication 12, caractérisé en ce que le tambour rotatif (123) possède une entrée (126) et une sortie (127), l'entrée du four ayant un dispositif de coopération (141, 142, 143) destiné à mélanger les ordures entrant dans le tambour par l'entrée (126) du tambour, et à transmettre les ordures placées à l'intérieur (140) du tambour vers la sortie (127) du tambour, le dispositif de coopération comprenant une structure (141) de forme spiralée fixée à l'intérieur (140) du tambour et coopérant avec une structure allongée (143) placée radialement et s'étendant longitudinalement à l'intérieur (140) du tambour.

14. Appareil selon la revendication 13, caractérisé en ce que le dispositif de coopération (141, 142, 143) comporte en outre des broches (142) placées à l'entrée (126) du tambour (123) et décalées vers l'axe de rotation (132) du tambour.

15. Appareil selon l'une quelconque des revendications 12, 13 ou 14, caractérisé en ce que le tambour (123) a un dispositif à canaux (300) destiné à ramasser les cendres résiduelles résultant de la gazéification des ordures au fond du tambour (123) et à soulever les cendres au-dessus de l'axe de rotation du tambour (132) afin que les cendres glissent vers le bas du dispositif à canaux (300) vers la sortie (127) du tambour.

16. Appareil selon la revendication 15, caractérisé en ce que le dispositif à canaux comporte un organe allongé (300) qui délimite un canal disposé en direction pratiquement parallèle à un plan du tambour (123) qui contient l'axe de rotation (132) du tambour.

17. Appareil selon la revendication 16, caractérisé en ce que l'organe allongé (300) a pratiquement une forme en L en coupe.

18. Appareil selon la revendication 17, caractérisé en ce que le dispositif à canaux (300) comporte un conduit ayant une ouverture d'entrée raccordée à l'extrémité d'un canal spiralé délimité par la structure (141) de forme spiralée afin que, pendant l'utilisation, la totalité pratiquement des cendres quittant l'extrémité du canal spiralé pénètre directement dans l'ouverture d'entrée de la conduite lors de leur montée pendant la rotation du tambour (123).

19. Appareil selon la revendication 18, comprenant un dispositif de guidage adjacent à une ouverture de sortie de la conduite et destiné à diriger les cendres de l'ouverture de sortie dans un dispositif d'entraînement de cendres destiné à entraîner les cendres le long de la sortie (127) du tambour.

20. Appareil selon l'une quelconque des revendications 12 à 19, caractérisé en ce que le tambour rotatif (123) est monté sur des roues menantes (124).

21. Appareil selon la revendication 20, caractérisé en ce que les roues menantes (124) sont rappelées par des ressorts antagonistes du poids du tambour (123).

22. Appareil selon la revendication 20 ou 21, caractérisé en ce que le tambour (123) est monté sur des roues menantes thermiquement isolées (124).

23. Appareil selon la revendication 22, caractérisé en ce qu'une roue menante comprend une partie métallique externe (158), une partie métallique interne (155) et une partie intermédiaire (159) d'un matériau d'isolation thermique.
